# EUROPEAN PATENT APPLICATION

(11) **EP 4 844 412 A2**
(43) Date of publication of application: **25.11.2026**
(21) Application number: 26177313.9
(22) Date of filing: 07.05.2026
(51) Int. Cl.: G01P 3/488, G01D 5/20, H02K 11/21, H02P 6/08

(54) **ELECTRICAL SYSTEMS COMPRISING A ROTARY ELECTRIC MACHINE AND A CONTROLLER**

(30) Priority: 20.05.2025 GB 202507862
(71) Applicant: Rolls-Royce plc, London N1 9FX (GB)
(72) Inventor: Boden, Mark, Derby, DE24 8BJ (GB); Teal, Ellis, Derby, DE24 8BJ (GB)
(74) Representative: Rolls-Royce plc

(57) **Abstract**

There is provided an electrical system 201, 202 comprising a rotary electric machine 230 and a controller 290. The rotary electric machine 230 comprises: a rotor 234; a plurality of teeth 260; and a phase arrangement 221, 222, 223. The phase arrangement 221, 222, 223 includes an armature coil 221a, 222a, 223a, 221b, 222b, 223b, 221c, 222c, 223c wound around one of the plurality of teeth 260. The controller 290 is configured to: receive 311, 312 a signal indicative of an electrical parameter associated with the rotary electric machine 230; and determine 321, 322 a speed of the rotor 234 based on the signal.

## Description

### CROSS REFERENCE TO RELATED APPLICATIONS

This represents the first application directed towards the subject-matter.

### FIELD

This invention relates to a system comprising a rotary electric machine and a controller configured to determine a speed of a rotor of the machine based on a signal.

### BACKGROUND

For effective gas turbine engine control, the speed of the interconnecting shaft(s) should be determined.

Conventionally, such a determination may be carried out using one or more dedicated variable reluctance speed probes positioned to be able to detect the passing of notches machined into a so-called geared wheel which is mechanically coupled (e.g., mounted) to the interconnecting shaft of interest. Each notch causes a substantially sinusoidal output from the probe as it passes a tip thereof. The speed of the interconnecting shaft can then be determined based on this output and the number of notches on the geared wheel.

It is desirable to avoid the need to include a geared wheel and an associated variable reluctance probe within a gas turbine engine while preserving the ability to determine the speed of the interconnecting shaft(s).

This invention has been devised with the foregoing in mind.

### SUMMARY

According to a first aspect there is provided an electrical system comprising a rotary electric machine and a controller. The rotary electric machine comprises: a rotor; a plurality of teeth; a phase arrangement including an armature coil wound around one of the plurality of teeth; and a sensor arrangement including a sensor coil wound around the one of the plurality of teeth, the sensor arrangement being galvanically isolated from the phase arrangement. The controller is configured to: receive a sensor signal indicative of an electrical parameter of the sensor arrangement; and determine a speed of the rotor based on the sensor signal.

In an embodiment, the teeth are formed in a stator of the rotary electric machine.

In an embodiment, wherein: the or each phase arrangement includes a plurality of armature coils, and each armature coil is wound around a respective one of the plurality of teeth.

In an embodiment, the plurality of teeth includes at least three teeth.

In an embodiment: the sensor arrangement includes a plurality of sensor coils, and each sensor coil is wound around a same one of the plurality of teeth as a respective armature coil of the phase arrangement.

In an embodiment, the or each electrical parameter is: a voltage (e.g., an induced voltage, an overall voltage, an overall induced voltage) across the sensor arrangement; or a current (e.g., an induced current, an overall current, an overall induced current) through the sensor arrangement.

In an embodiment, the plurality of sensor coils are electrically coupled in series with one another.

In an embodiment the plurality of sensor coils are electrically coupled in series with one another such that an overall voltage (e.g., an overall induced voltage) across the sensor arrangement is lower than a sum of a magnitude of an voltage (e.g., an induced voltage) across each of the sensor coils as caused (e.g., induced) by rotation of the rotor in use.

In an embodiment a respective one of the sensor coils is wound around each of the plurality of teeth.

In an embodiment: the rotary electric machine comprises a plurality of phase arrangements, each phase arrangement includes an armature coil, and the armature coil of each phase arrangement is wound around a respective one of the plurality of teeth.

In an embodiment, the plurality of phase arrangements includes three phase arrangements.

In an embodiment, only a single armature coil is wound around each tooth.

In an embodiment: the rotary electric machine comprises a plurality of sensor arrangements, each sensor arrangement includes a sensor coil wound around a same one of the plurality of teeth as the armature coil of a respective one of the phase arrangements, the sensor arrangements are galvanically isolated from the phase arrangements, and the controller is configured to: receive a plurality of sensor signals, each sensor signal being indicative of an electrical parameter of a respective one of the sensor arrangements; and determine the speed of the rotor based on the sensor signals.

According to a second aspect there is provided a rotary electric machine and a controller. The rotary electric machine comprises: a rotor; a plurality of teeth; a phase arrangement including a plurality of armature coils, each armature coil being wound around a respective one of the plurality of teeth; and a signal processing arrangement. The controller is configured to: receive a drive signal from the signal processing arrangement, the drive signal being indicative of an electrical parameter of the phase arrangement; and determine a speed of the rotor based on the drive signal.

In an embodiment, the teeth are formed in a stator of the rotary electric machine. In an embodiment. the electrical parameter is: a voltage across the phase arrangement; or a current through the phase arrangement.

In an embodiment: the rotary electric machine comprises a plurality of phase arrangements, each phase arrangement includes a plurality of armature coils, each armature coil is wound around a respective one of the plurality of teeth, and the controller is configured to: receive a plurality of drive signals from the signal processing arrangement, each drive signal being indicative of an electrical parameter of a respective one of the phase arrangements; and determine the speed of the rotor based on the drive signals.

In an embodiment, the signal processing arrangement comprises a voltage converter. In an embodiment, the voltage converter is a step-down voltage converter.

In an embodiment, the signal processing arrangement comprises a passive filter. In an embodiment, the passive filter is a low-pass filter.

In an embodiment, the signal processing arrangement comprises a buffer amplifier. In an embodiment, the buffer amplifier is a voltage buffer.

According to a third aspect there is provided an aircraft comprising an electrical system in accordance with the first aspect or the second aspect.

### BRIEF DESCRIPTION OF THE DRAWINGS

Embodiments will now be described by way of example only with reference to the accompanying drawings, in which:
FIG. 1 is a top view of an aircraft comprising a gas turbine engine;
FIG. 2 is a cut-through side view of the gas turbine engine of FIG. 1;
FIG. 3 is a schematic diagram of a first example electrical system;
FIG. 4 is a flowchart of a first example method; and
FIG. 5 is a schematic diagram of a second example electrical system;
FIG. 6 is an outboard radial view of a rotary electric machine suitable within the second example electrical system of FIG. 5; and
FIG. 7 is a flowchart of a second example method.

### DETAILED DESCRIPTION

### Aircraft

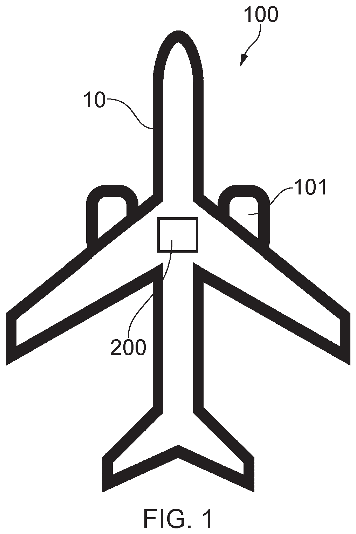

FIG. 1 shows a simplified and schematic top view of an aircraft 100 comprising an airframe 10, an electrical system 200 and a gas turbine engine 101.

### Gas turbine engine

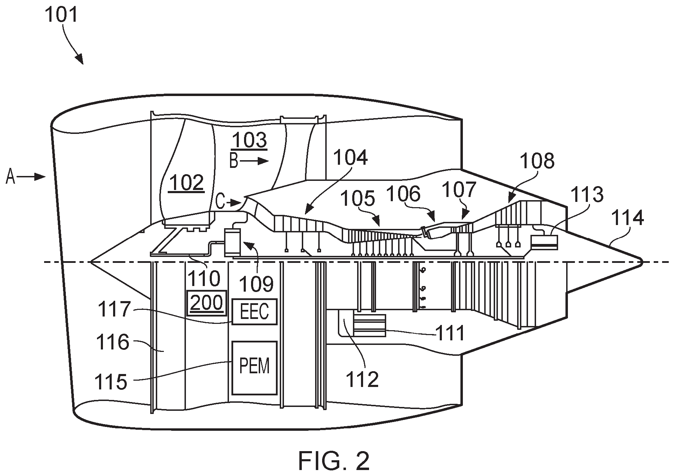

A cut-through side view of the general arrangement of the gas turbine engine 101 of FIG. 1 is shown by FIG 2. The engine 101 is of turbofan configuration, and thus comprises a ducted fan 102 that receives intake air A and generates two pressurised airflows: a bypass flow B which passes axially through a bypass duct 103 and a core flow C which enters a core gas turbine.

The core gas turbine comprises, in axial flow series, a low-pressure compressor 104, a high-pressure compressor 105, a combustor 106, a high-pressure turbine 107, and a low-pressure turbine 108.

In operation, the core flow C is compressed by the low-pressure compressor 104 and is then directed into the high-pressure compressor 105 where further compression takes place. The compressed air exhausted from the high-pressure compressor 105 is directed into the combustor 106 where it is mixed with fuel and the mixture is combusted. The resultant hot combustion products then expand through, and thereby drive, the high-pressure turbine 107 and in turn the low-pressure turbine 108 before being exhausted to provide a relatively small proportion of the total thrust.

The high-pressure turbine 107 drives the high-pressure compressor 105 via an interconnecting shaft. The low-pressure turbine 108 drives the low-pressure compressor 104 via another interconnecting shaft. Together, the high-pressure compressor 105, high-pressure turbine 107, and associated interconnecting shaft form part of a high-pressure spool of the engine 101. Similarly, the low-pressure compressor 104, low-pressure turbine 108, and associated interconnecting shaft form part of a low-pressure spool of the engine 101. Such nomenclature will be familiar to those skilled in the art. Those skilled in the art will also appreciate that whilst the illustrated engine has two spools, other gas turbine engines have a different number of spools, e.g., three spools.

The fan 102 is driven by the low-pressure turbine 108 via a reduction gearbox in the form of a planetary-configuration epicyclic gearbox 109. Thus in this configuration, the low-pressure turbine 108 is connected with a sun gear of the gearbox 109. The sun gear is meshed with a plurality of planet gears located in a rotating carrier, which planet gears are in turn meshed with a static ring gear. The rotating carrier drives the fan 102 via a fan shaft 110. It will be appreciated that in alternative embodiments a star-configuration epicyclic gearbox (in which the planet carrier is static and the ring gear rotates and provides the output) may be used instead, and indeed that the gearbox 109 may be omitted entirely so that the fan 102 is driven directly by the low-pressure turbine 108.

It is increasingly desirable to facilitate a greater degree of electrical functionality on the airframe and on the engine. To this end, the engine 101 of the present embodiment comprises one or more rotary electric machines, generally capable of operating both as a motor and as a generator. The number and arrangement of the rotary electric machines will depend to some extent on the desired functionality. Some embodiments of the engine 101 include a single rotary electric machine 111 driven by the high-pressure spool, for example by a core-mounted accessory drive 112 of conventional configuration. Such a configuration facilitates the generation of electrical power for the engine and the aircraft and the driving of the high-pressure spool to facilitate starting of the engine in place of an air turbine starter. Other embodiments, including the one shown in Figure 1, comprise both a first rotary electric machine 111 coupled with the high-pressure spool and a second rotary electric machine 113 coupled with the low pressure spool. In addition to generating electrical power and the starting the engine 101, having both first and second rotary machines 111, 113, connected by power electronics, can facilitate the transfer of mechanical power between the high and lower pressure spools to improve operability, fuel consumption etc.

As mentioned above, in Figure 1 the first rotary electric machine 111 is driven by the high-pressure spool by a core-mounted accessory drive 112 of conventional configuration. In alternative embodiments, the first electric machine 111 may be mounted coaxially with the turbomachinery in the engine 101. For example, the first electric machine 111 may be mounted axially in line with the duct between the low- and high-pressure compressors 104 and 105. In Figure 1, the second electric machine 113 is mounted in the tail cone 114 of the engine 101 coaxially with the turbomachinery and is coupled to the low-pressure turbine 108. In alternative embodiments, the second rotary electric machine 113 may be located axially in line with low-pressure compressor 104, which may adopt a bladed disc or bladed drum configuration to provide space for the second rotary electric machine 113. It will of course be appreciated by those skilled in the art that any other suitable location for the first and (if present) second electric machines may be adopted.

The first and second electric machines 111, 113 are connected with power electronics. Extraction of power from or application of power to the electric machines is performed by a power electronics module (PEM) 115. In the present embodiment, the PEM 115 is mounted on the fan case 116 of the engine 101, but it will be appreciated that it may be mounted elsewhere such as on the core of the gas turbine, or in the vehicle to which the engine 101 is attached, for example.

Control of the PEM 115 and of the first and second electric machines 111 and 113 is in the present example performed by an engine electronic controller (EEC) 117. In the present embodiment the EEC 117 is a full-authority digital engine controller (FADEC), the configuration of which will be known and understood by those skilled in the art. It therefore controls all aspects of the engine 101, i.e., both of the core gas turbine and the first and second electric machines 111 and 113. In this way, the EEC 117 may holistically respond to both thrust demand and electrical power demand.

The one or more rotary electric machines 111, 113 and the power electronics 115 may be configured to output to or receive electric power from one, two or more dc busses. The dc busses allow for the distribution of electrical power to other engine electrical loads and to electrical loads on the airframe. The dc busses may further receive electrical power from, or deliver electrical power to, an energy storage system such as one or more battery modules or packs.

Those skilled in the art will appreciate that the gas turbine engine 101 described above may be regarded as a 'more electric' gas turbine engine because of the increased role of the electric machines 111, 113 compared with those of conventional gas turbines. As shown by FIG. 2, the gas turbine engine 101 comprises an electrical system 200.

### Electrical systems

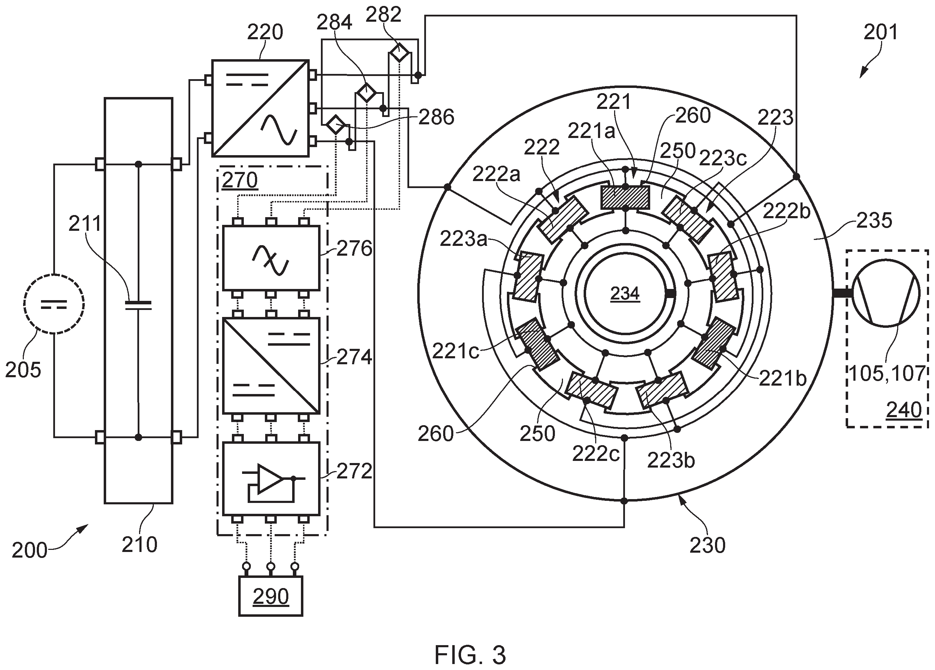

FIG. 3 is a schematic diagram of a first example electrical system 201 which is particularly, but not exclusively, suitable for use with the gas turbine engine 101 of FIG. 2 and/or the aircraft 100 of FIG. 1 (e.g., as the electrical system 200). The first example electrical system 201 comprises a DC link 210, a power converter 220, synchronous motor 230 (e.g., a permanent magnet synchronous motor 230), a signal processing arrangement 270, a plurality of voltage transducers 282, 284, 286 and a controller 290. The synchronous motor 230 may be more generally referred to as an electric motor 230 or an electric machine 230 (e.g., a rotary electric machine 230). The DC link 210 includes a capacitor 211 for the purpose of stabilizing a voltage of the DC link 210.

The electric motor 230 includes a rotor 234, a stator 235 and a set (e.g., a plurality) of stator phase arrangements 221-223. The rotor 234 comprises a set (e.g., a plurality) of permanent magnets (not shown for the sake of simplicity). A plurality of slots 250 are formed within the stator 235 and angularly distributed around a centre of the stator 235, with a tooth 260 (e.g., a stator tooth 260) being disposed between angularly adjacent slots 250 (e.g., between each pair of angularly adjacent slots 250). Accordingly, the electric motor 230 also includes a plurality of teeth 260 formed in the stator 235, with the number of teeth 260 being equal to the number of slots 250. In the example of FIG. 2, the number of teeth 260 and slots 250 is nine, although other numbers of teeth 260 and slots 250 are envisaged.

In the example of FIG. 3, the set of stator phase arrangements comprises a first stator phase arrangement 221, a second stator phase arrangement 222 and a third stator phase arrangement 223. Consequently, the electric motor 230 shown by FIG. 3 may be described as a three-phase AC electric motor 230. Each phase arrangement 221-223 comprises a plurality of armature coils. Namely, each phase arrangement comprises a primary armature coil 221a, 222a, 223a, a secondary armature coil 221b, 222b, 223b and a tertiary armature coil 221c, 222c, 223c. Each armature coil 221a-221c, 222a-222c, 223a-223c is wound around a respective (e.g., a different) one of the plurality of teeth 260 and comprises multiple turns.

The phase arrangements 221-223 are shown as being connected in a star/wye configuration by FIG. 3, with the armature coils 221a-221c, 222a-222c, 223a-223c in each phase arrangement 221-223 being coupled to one another in parallel. However, it will be appreciated that the phase arrangements 221-223 may be otherwise connected, for example in a delta configuration. Moreover, in the example of FIG. 3, only a single armature coil 221a-221c, 222a-222c, 223a-223c is wound around each of the plurality of teeth 260 (e.g., each tooth 260), although each armature coil 221a-221c, 222a-222c, 223a-223c comprises multiple turns.

The rotor 234 is mechanically coupled to a load 240 (e.g., a mechanical load 240) and is therefore configured to drive the load 240. The load 240 is directly or indirectly driven by rotation of the rotor 234. By way of example, the rotor 234 may be directly mechanically coupled to the load 240 via a driveshaft. By way of further example, the rotor 234 may be indirectly coupled to the load 240 via a transmission comprising a gearbox. In the example electrical system 201 of FIG. 3, the load 240 is (e.g., includes) an interconnecting shaft of a gas turbine engine (e.g., the interconnecting shaft between the high-pressure compressor 105 and the high-pressure turbine 107 of the gas turbine engine 101 of FIG. 2). In this way, the motor 230 may form part of an electrical starter generator, ESG, of the gas turbine engine.

The power converter220 is generally configured to receive an input DC voltage from the DC link 210 and to provide a plurality of output electrical currents (i.e., alternating currents, ACs) and corresponding voltages to the set of stator phase arrangements 221-223 (e.g., a respective output current and corresponding voltage to each of the set of stator phase arrangements 221-223). The input DC voltage corresponds to the voltage of the DC link 210. Accordingly, the electric motor 230 draws AC electrical power from the power converter220 in use. The power converter220 may comprise a plurality of switching devices, at least one inductive element and/or at least one capacitive element arranged in a suitable inverter topology, as will be known to those skilled in the art. The voltage transducers 282-286 are each configured to monitor the voltage provided between a respective pair of the stator phase arrangements 221-223 by the power converter220. That is, a first 282 of the voltage transducers 282-286 is configured to monitor the voltage between the first stator phase arrangement 221 and the second stator phase arrangement 222, a second 284 of the voltage transducers 282-286 is configured to monitor the voltage between the second stator phase arrangement 222 and the third stator phase arrangement 223, while a third 286 of the voltage transducers 282-286 is configured to monitor the voltage between the third stator phase arrangement 223 and the first stator phase arrangement 221.

The DC link 210 is configured to receive a DC supply voltage from a DC power supply 205. The DC power supply 205 may be, or be derived from, an internal power supply (e.g., a fuel-cell pack, a battery or a rectifier coupled to a generator). If so, the DC power supply 205 may be disposed within gas turbine engine 101 shown by FIG. 2. Otherwise, the DC power supply 205 may be, or be derived from, an external power supply (e.g. a shore power supply) which is couplable to the electrical system 201 via an external connection port and appropriate cabling.

The controller 290 is generally configured to monitor (e.g., automatically monitor) the electrical system 201. To this end, the controller 290 is communicatively coupled to the plurality of voltage transducers 282-286 via the signal processing arrangement 270. Namely, as described in further detail below, the controller 290 is configured to receive a drive signal from each of the voltage transducers 282-286 corresponding to an overall voltage across the respective phase arrangement 221-223. The controller 290 may form part of the EEC 117 described above or may be a separate, dedicated controller for the electrical system 201. The controller 290 may also be configured to control (e.g., automatically control) the electrical system 201. More specifically, the controller 290 may be configured to control the power converter220 (e.g., by controlling a state of each of the switching devices of the power converter220) to provide an inversion functionality or a rectification functionality for the electric motor 230.

The signal processing arrangement 270 comprises a buffer amplifier 272, a voltage converter 274 and a passive filter 276. The signal processing arrangement 270 is generally configured to condition the drive signals received by the controller 290 from the voltage transducers 282-286 for processing thereby. The buffer amplifier 272 is (e.g., is configured as) a voltage buffer 272 and functions to improve the transfer of the drive signals from the voltage transducers 282-286 to the controller 290. The voltage converter 274 is (e.g., is configured as) a step-down converter 274, such as a buck converter or a potential divider, and serves to reduce the voltage of the drive signals received by the controller 290 (which may otherwise cause damage to the controller 290 or prevent appropriate functioning thereof). Further, the passive filter 276 is (e.g., is configured as) a low-pass passive filter 276 and functions to improve a signal-to-noise ratio, SNR, of the drive signals received by the controller 290.

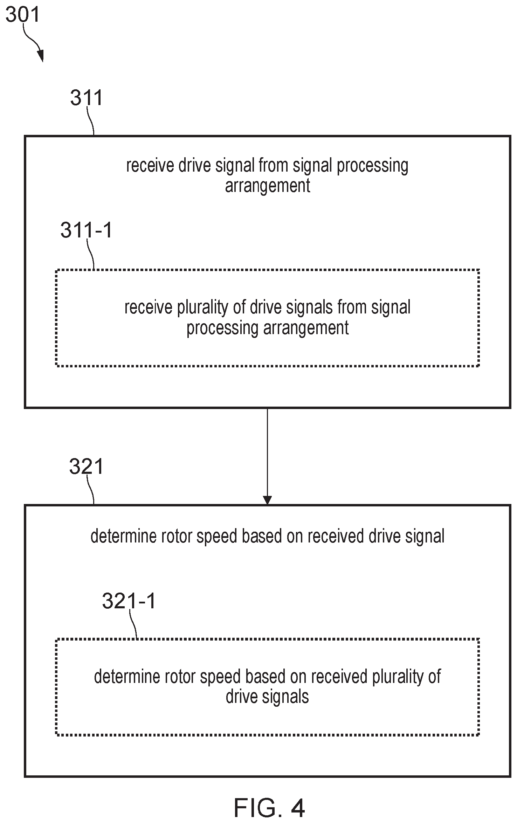

FIG. 4 is a flowchart which shows a first example method 301 which, in use, is carried out by the controller 290 of the first example electrical system 201.

The method 301 includes, at block 311, receiving a drive signal from one of the voltage transducers 282-286 via the signal processing arrangement 270. The method may include, at sub-block 311-1, receiving a drive signal from each of the voltage transducers 282-286 via the signal processing arrangement (i.e., receiving a plurality of drive signals). In FIGs. 3 and 4, the drive signals are received from the voltage transducers 282-286 and are thus indicative of the voltage (e.g., the overall voltage) across the relevant phase arrangement 221-223, with this voltage being a type of electrical parameter of the relevant phase arrangement. Nevertheless, it is envisaged that the or each drive signal may be indicative of another type of electrical parameter of the relevant phase arrangement 221-223. By way of example, the electrical parameter may be a current through the phase arrangement 221-223.

The method 301 also includes, at block 321, determining a speed of the rotor 234 based on the drive signal received at block 311. **In** turn, determining the speed of the rotor 234 may include, at sub-block 321-1, determining the speed of the rotor 234 based on the plurality of drive signals received at sub-block 311-1. The speed of the rotor 234 may be determined based on the or each drive signal using, for example, a zero-crossing detection algorithm, a Fourier transform algorithm or an algorithm which counts a time elapsed between peaks in the or each drive signal.

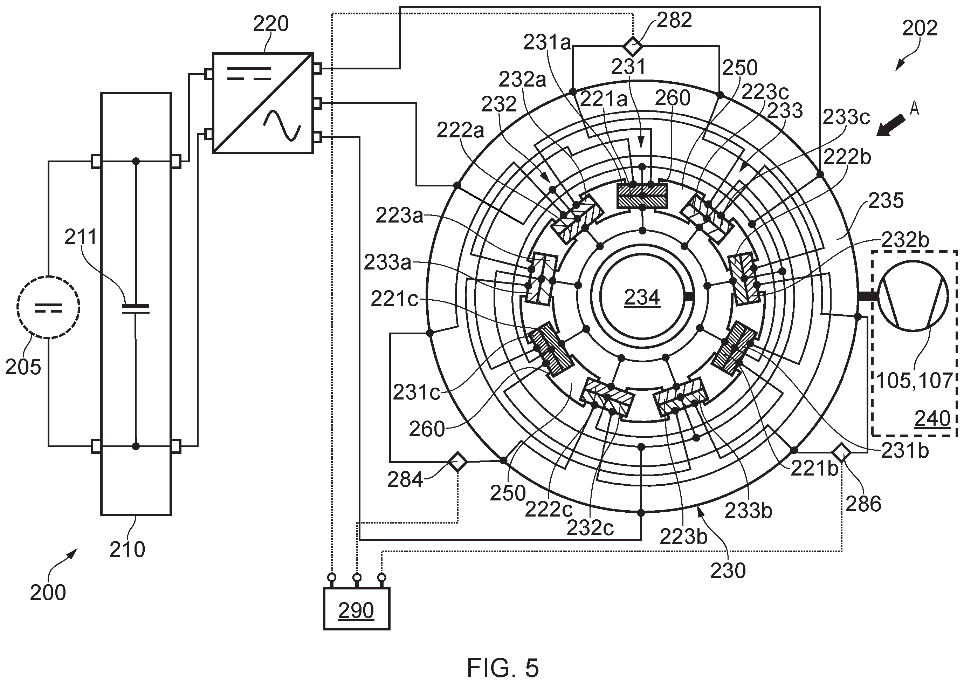

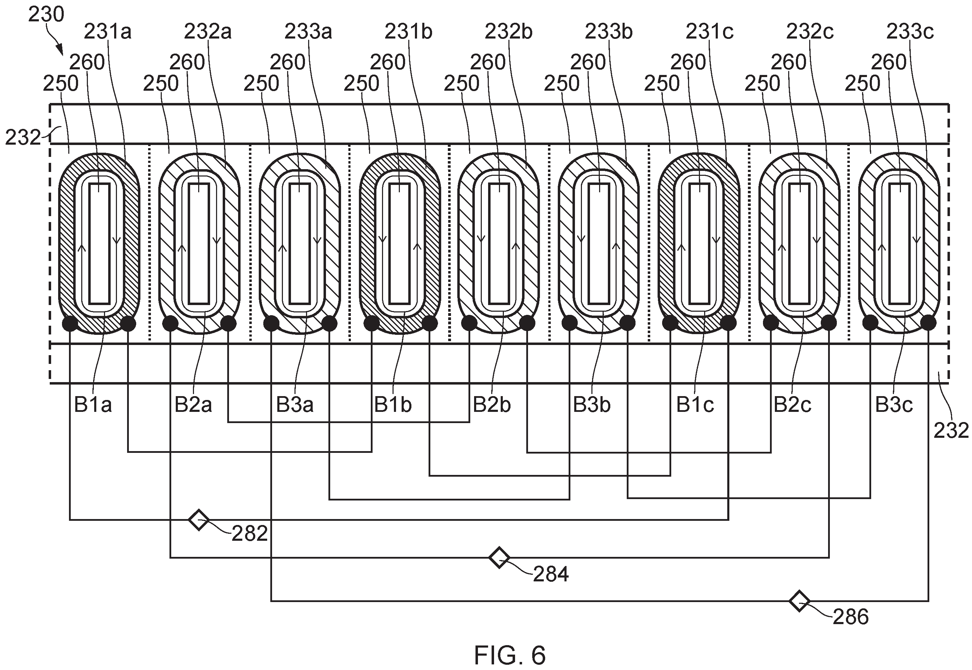

FIG. 5 is a schematic diagram of a second example electrical system 202 which is particularly, but not exclusively, suitable for use with the gas turbine engine 101 of FIG. 2 and/or the aircraft 100 of FIG. 1 (e.g., as the electrical system 200). The second example electrical system 201 is generally similar to the first example electrical system 201 described above with reference to FIG. 3, with like reference signs denoting common or similar features. FIG. 6 is a schematic outboard radial view of the electric motor 230 of the second example electrical system 202 shown by FIG. 5, as would be seen in the direction indicated by arrow A on FIG. 5.

In contrast to the first example electrical system 201, the second example electrical system 202 does not comprise a signal processing arrangement 270. The controller 290 is communicatively coupled to the plurality of voltage transducers 282-286, but not via the signal processing arrangement 270. The second example electrical system 202 additionally comprises a set (e.g., a plurality) of sensor arrangements 231-233.

In the example of FIG. 5, the set of sensor arrangements comprises a first sensor arrangement 231, a second sensor arrangement 232 and a third sensor arrangement 233. Each sensor arrangement 231-233 comprises a plurality of sensor coils. Namely, each sensor arrangement comprises a primary sensor coil 231a, 232a, 233a, a secondary sensor coil 231b, 232b, 233b and a tertiary sensor coil 231c, 232c, 233c. Each sensor coil 231a-231c, 232a-232c, 233a-233c is wound around a respective (e.g., a different) one of the plurality of teeth 260 (e.g., tooth 260) and comprises multiple turns.

Each sensor coil 231a-231c, 232a-232c, 233a-233c is galvanically isolated from the armature coils 221a-221c, 222a-222c, 223a-223c. Accordingly, the sensor arrangements 231-233 are each galvanically isolated from the phase arrangements 221-223. The sensor coils 231a-231c, 232a-232c, 233a-233c in each sensor arrangement 231-233 are electrically coupled to one another in series, as shown by FIGs. 5 and 6.

Each sensor coil 231a-231c, 232a-232c, 233a-233c is wound around the same tooth 260 as one of the armature coils 221a-221c, 222a-222c, 223a-223c. As a result, each tooth 260 has a single 231a-231c, 232a-232c, 233a-233c sensor coil and a single armature coil 221a-221c, 222a-222c, 223a-223c wound around it. More specifically, each primary sensor coil 231a, 232a, 233a is wound around the same individual tooth 260 as a respective one of the primary armature coils 221a, 222a, 223a, each secondary sensor coil 231b, 232b, 233b is wound around the same individual tooth 260 as a respective one of the secondary armature coils 221b, 222b, 223b and each tertiary sensor coil 231c, 232c, 233c is wound around the same individual tooth 260 as a respective one of the tertiary armature coils 221c, 222c, 223c.

In further contrast to the first example electrical system 201, the voltage transducers 282-286 of the second example electrical system 202 are not configured to monitor the voltage provided to a respective one of the stator phase arrangements 221-223 by the power converter220. Instead, the voltage transducers 282-286 of the second example electrical system 202 are configured to monitor the voltage across a respective one of the sensor arrangements 231-233. It is anticipated that the voltage transducers 282-286 of the second example electrical system 202 may form a part of the controller 290. That is, the first 282 of the voltage transducers 282-286 is configured to monitor the voltage across the first sensor arrangement 231, the second 284 of the voltage transducers 282-286 is configured to monitor the voltage across the second sensor arrangement 232, while the third 286 of the voltage transducers 282-286 is configured to monitor the voltage across the third sensor arrangement 233. As will be appreciated by those skilled in the art, as the rotor 234 rotates with respect to the stator 235, an electrical voltage is induced within the sensor coils of each sensor arrangement 231, 232, 233. This voltage is referrable to as an induced voltage.

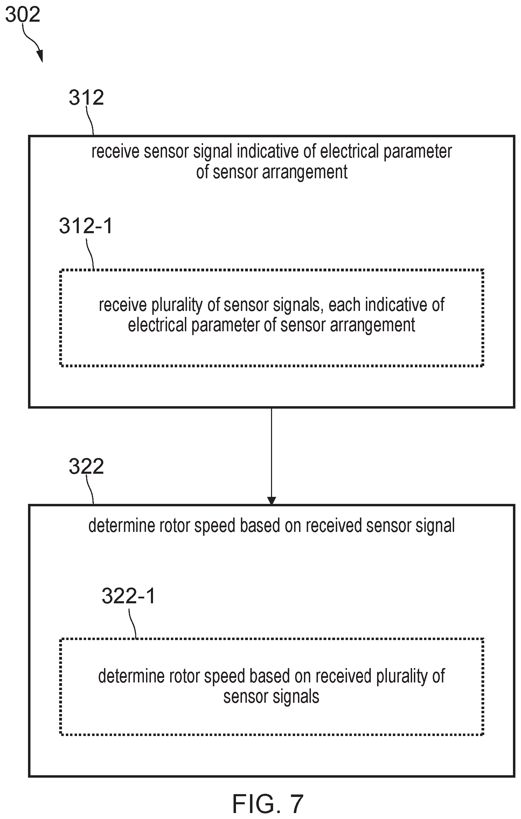

FIG. 7 is a flowchart which shows a second example method 302 which, in use, is carried out by the controller 290 of the second example electrical system 202.

The method 302 includes, at block 312, receiving a sensor signal from one of the voltage transducers 282-286. The method may include, at sub-block 312-1, receiving a sensor signal from each of the voltage transducers 282-286 (i.e., receiving a plurality of drive signals). In FIGs. 5 to 7, the sensor signals are received from the voltage transducers 282-286 and are thus indicative of the induced voltage (e.g., the overall induced voltage) across the relevant sensor arrangement 231-233, with this induced voltage being a type of electrical parameter of the relevant sensor arrangement. Nevertheless, it is envisaged that the or each sensor signal may be indicative of another type of electrical parameter of the relevant sensor arrangement 231-233. By way of example, the electrical parameter may be a current (e.g., an induced current) through the sensor arrangement 231-233.

The method 302 also includes, at block 322, determining a speed of the rotor 234 based on the sensor signal received at block 312. In turn, determining the speed of the rotor 234 may include, at sub-block 322-1, determining the speed of the rotor 234 based on the plurality of sensor signals received at sub-block 312-1. The speed of the rotor 234 may be determined based on the or each sensor signal using, for example, a zero-crossing detection algorithm, a Fourier transform algorithm or an algorithm which counts a time elapsed between peaks in the or each sensor signal. A time between zero-crossings/a time period determined by a Fourier transform algorithm/a time between peaks in the or each sensor signal is generally proportional to the speed of the rotor 234. This determination may be carried out by the controller 290 (e.g., by software executed by the controller 290).

An average direction of electrical current flow through each of the sensor coils 231a, 231b, 231c, 232a, 232b, 232c, 233a, 233b, 233c which, in use, is induced therein as the rotor 234 rotates with respect to the stator 235 is indicated by the circuital arrows B1a, B1b, B1c, B2a, B2b, B2c, B3a, B3b, B3c on FIG. 6.

The average direction of electrical current flow B1b, B2b, B3b through each of the secondary sensor coils 231b, 232b, 233b is, in FIG. 6, counter-clockwise around the relevant tooth 260. On the other hand, the average direction of electrical current flow B1a, B2a, B3a, B1c, B2c, B3c through each of the primary sensor coils 231a, 232a, 233a and each of the tertiary sensor coils 231c, 232c, 233c is, in FIG. 6, clockwise around the relevant tooth 260. To this end, the secondary sensor coils 231b, 232b, 233b are wound around the relevant teeth 260 in a direction which opposes a direction in which the primary sensor coils 231a, 232a, 233a and the tertiary sensor coils 231c, 232c, 233c are wound around the relevant teeth 260.

Consequently, and further as a consequence of the series electrical coupling between the sensor coils of each sensor arrangement 231, 232, 233 as shown by FIGs. 5 and 6, the overall induced voltage across each sensor arrangement 231, 232, 233 is lower than the simple sum of the magnitude of the induced voltage across each of the plurality of sensor coils within that sensor arrangement 231, 232, 233. Namely, the overall induced voltage across each sensor arrangement 231, 232, 233 is substantially equal to a difference between: (i) a sum of the primary sensor coil 231a, 232a, 233a and the tertiary sensor coil 231c, 232c, 233c; and (ii) the secondary sensor coil 231b, 232b, 233b. This configuration provides additional inductance to the sensor arrangement 231, 232, 233, which may help inhibit (e.g., limit) the development of an excessive current within the sensor arrangement 231, 232, 233 if the sensor arrangement 231, 232, 233 develops a fault. Specifically, it may be that the induced voltages in the primary sensor coil 231a, 232a, 233a and the secondary sensor coil 231b, 232b, 233b substantially cancel one another out, with the number of turns of the tertiary sensor coil 231c, 232c, 233c being selected to provide a sufficiently large overall induced voltage across the sensor arrangement 231, 232, 233 for processing by the controller 290 as described above with respect to FIG. 7.

The inventors have found that there is a relatively high mutual electromagnetic coupling between each armature coil and the sensor coil with which it shares a same/common stator tooth 260 but that this does not prevent determination of the speed of the rotor 234 based on the received sensor signal(s) by the controller 290.

The provision of sensor coils on/around teeth 260 around which armature coils belonging to more than one phase arrangement 221, 222, 223 are also provided on/around relatively increases the bandwidth of the information provided to the controller 290 (e.g., by providing more than one sensor signal which in turns provides, for instance, additional zero-crossing points for detection of the speed of the rotor 234).

Further, the provision of sensor coils on each tooth 260 with on/around which the armature coils of a single (and each) phase arrangement are provided facilitates improved fitting of the coils within the slots 250, thereby improving a performance of the electric motor 230.

Although the first and second electrical systems 201, 202 have been described separately and in contrast with one another, it is envisaged that the first electrical system 201 may have any of (e.g., any combination of) the features of the second electrical system 202 and vice versa.

As will be appreciated by those skilled in the art in view of the disclosure provided herein, systems in accordance with the present disclosure (i.e., both the first and second example electrical systems 201, 202) enable a speed of a rotor of a rotary electric machine to be determined without use of dedicated hardware within or near the rotary electric machine, such as one or more dedicated variable reluctance speed probes.

Various examples have been described, each of which comprise one or more combinations of features. It will be appreciated by those skilled in the art that, except where clearly mutually exclusive, any of the features may be employed separately or in combination with any other features and the invention extends to and includes all combinations and sub-combinations of one or more features described herein.

## Claims

1. An electrical system comprising a rotary electric machine and a controller, wherein:
the rotary electric machine comprises:
a rotor;
a plurality of teeth;
a phase arrangement including an armature coil wound around one of the plurality of teeth; and
a sensor arrangement including a sensor coil wound around the one of the plurality of teeth, the sensor arrangement being galvanically isolated from the phase arrangement,
the controller is configured to:
receive a sensor signal indicative of an electrical parameter of the sensor arrangement; and
determine a speed of the rotor based on the sensor signal.

2. The system of claim 1, wherein the or each phase arrangement includes a plurality of armature coils, and wherein each armature coil is wound around a respective one of the plurality of teeth.

3. The system of claim 2, wherein the sensor arrangement includes a plurality of sensor coils, and wherein each sensor coil is wound around a same one of the plurality of teeth as a respective armature coil of the phase arrangement.

4. The system of claim 3, wherein the plurality of sensor coils are electrically coupled in series with one another such that an overall induced voltage across the sensor arrangement is lower than a sum of a magnitude of an induced voltage across each of the sensor coils.

5. The system of claim 3 or claim 4, wherein a respective one of the sensor coils is wound around each of the plurality of teeth.

6. The system of any preceding claim, wherein:
the rotary electric machine comprises a plurality of phase arrangements,
each phase arrangement includes an armature coil, and
the armature coil of each phase arrangement is wound around a respective one of the plurality of teeth.

7. The system of claim 6, wherein:
the rotary electric machine comprises a plurality of sensor arrangements,
each sensor arrangement includes a sensor coil wound around a same one of the plurality of teeth as the armature coil of a respective one of the phase arrangements,
the sensor arrangements are galvanically isolated from the phase arrangements,
and the controller is configured to:
receive a plurality of sensor signals, each sensor signal being indicative of an electrical parameter of a respective one of the sensor arrangements; and
determine the speed of the rotor based on the sensor signals.

8. An electrical system comprising a rotary electric machine and a controller, wherein:
the rotary electric machine comprises:
a rotor;
a plurality of teeth;
a phase arrangement including a plurality of armature coils, each armature coil being wound around a respective one of the plurality of teeth; and
a signal processing arrangement;
the controller is configured to:
receive a drive signal from the signal processing arrangement, the drive signal being indicative of an electrical parameter of the phase arrangement; and
determine a speed of the rotor based on the drive signal.

9. The system of claim 8, wherein the signal processing arrangement comprises a voltage converter.

10. The system of claim 9, wherein the voltage converter is a step-down voltage converter.

11. The system of any of claims 8 to 10, wherein the signal processing arrangement comprises a passive filter.

12. The system of claim 11, wherein the passive filter is a low-pass filter.

13. The system of any of claims 8 to 12, wherein the signal processing arrangement comprises a buffer amplifier.

14. The system of claim 13, wherein the buffer amplifier is a voltage buffer.

15. An aircraft comprising the system of any preceding claim.
